# EUROPÄISCHE PATENTSCHRIFT

(11) **EP 0 634 567 B1**
(45) Veröffentlichungstag und Bekanntmachung des Hinweises auf die Patenterteilung: **18.09.1996**
(21) Anmeldenummer: 93111479.7
(22) Anmeldetag: 16.07.1993
(51) Int. Cl.: F01N 7/00, F02D 41/14

(54) **Anpassung von Verfahren zur Katalysatorwirkungsgradüberprüfung an Katalysatoren mit unterschiedlichem Wirkungsgrad**
Adaptation of a method to detect the catalytic efficiency of catalytic converters with different efficiencies
Adaptation d'une méthode pour détecter l'efficacité catalitique de catalyseurs avec efficacités différentes

(43) Veröffentlichungstag der Anmeldung: 18.01.1995
(73) Patentinhaber: SIEMENS AKTIENGESELLSCHAFT, 80333 München (DE)
(72) Erfinder: Achleitner, Erwin, Dr.Dipl.-Ing., D-8400 Regensburg (DE)

(56) Entgegenhaltungen:
- DE-A- 2 328 459
- DE-A- 4 101 616

## Beschreibung

Die Erfindung betrifft eine Anpassung von Verfahren zur Katalysatorwirkungsgradüberprüfung, bei denen eine Sauerstoffsonde vor und hinter dem zu prüfenden Katalysator angeordnet ist, an Katalysatoren mit unterschiedlichem Wirkungsgrad.

Neben anderen möglichen Prüfverfahren kann der Wirkungsgrad eines Katalysators mit zwei Sauerstoffsonden überprüft werden. Es wird dabei eine Sauerstoffsonde vor dem zu überprüfenden Katalysator angeordnet und eine Sauerstoffsonde nach dem Katalysator, wie dies beispielsweise in der DE 23 04 622 oder der DE 23 28 459 beschrieben ist. Bei den dort beanspruchten Verfahren wird die Differenz der Ausgangssignale der beiden Sauerstoffsonden ausgewertet.

Aus der DE-A-41 01 616 ist eine Einrichtung zum Messen von Katalysator-Reinigungsfaktoren bekannt, bei der ein erster und ein zweiter Luft/ Brennstoffverhältnis-Sensor zum Erfassen von Luft/ Brennstoffverhältnissen jeweils stromauf- bzw. stromab des Katalysators angeordnet sind, wobei der erste Sensor und der zweite Sensor unterschiedliche Ansprechzeiten aufweisen. Aus der Differenz der Ansprechzeiten des ersten und des zweiten Sensors werden die Reinigungsfaktoren des Katalysators ermittelt.

Die katalytische Nachbehandlung von Abgasen, setzt eine bestimmte Zusammensetzung des Abgases voraus, ein sogenanntes stöchiometrisches Gemisch. Hierzu dient eine Gemischregelung, die mit der Sauerstoffsonde vor dem Katalysator die Gemischzusammensetzung mißt und periodisch in engen Grenzen um den Sollwert regelt. Es entstehen hierdurch sogenannte Lambdaschwankungen, d.h. Schwankungen der Gemischzusammensetzung.

Ein Katalysator mit gutem Wirkungsgrad hat ein hohes Sauerstoffspeichervermögen und glättet diese Schwankungen. Der Sauerstoffsensor nach dem Katalysator erkennt somit keine oder nur noch geringe Schwankungen. Aus dem Vergleich der Lambdaschwankungen nach dem Katalysator mit den Lambdaschwankungen vor dem Katalysator kann somit der Wirkungsgrad des Katalysators bestimmt werden.

Der Nachteil bisheriger Verfahren besteht darin, daß die Überprüfung des Katalysators nur in einem kleinem Wirkungsgradbereich möglich ist.

Aufgabe der vorliegenden Erfindung ist es daher, eine Vorrichtung anzugeben, die es ermöglicht, den Katalysator in einem großen Wirkungsgradbereich zu überprüfen.

Gelöst wird diese Aufgabe mit einer Vorrichtung gemäß den Merkmalen des Anspruchs 1.
Die Unteransprüche beschreiben vorteilhafte Weiterbildungen der erfindungsgemäßen Vorrichtung.

Bei der erfindungsgemäßen Vorrichtung werden für die Sauerstoffsonde vor dem Katalysator und die Sauerstoffsonde nach dem Katalysator Sonden mit unterschiedlicher Ansprechzeit verwendet. Unter Ansprechzeit ist dabei die Zeit zu verstehen, die die Sonde benötigt, um bei einer veränderten Gemischzusammensetzung dieses veränderte Gemisch auch mit einem geänderten Spannungssignal anzuzeigen.
Hat die Sonde hinter dem Katalysator eine kurze Ansprechzeit verglichen mit der Sonde vor dem Katalysator, so reagiert sie empfindlich auch noch auf kleine Restschwankungen. Es ist somit eine Überprüfung des Katalysators in einem großen Wirkungsgradbereich möglich, speziell auch in einem Bereich, in dem der Wirkungsgrad noch recht gut ist, also kaum Schwankungen der Lambdaregelung zur zweiten Sauerstoffsonde gelangen.

Hat die Sonde hinter dem Katalysator dagegen eine lange Ansprechzeit verglichen mit der Sonde vor dem Katalysator, so ist es möglich, einen Katalysator differenziert auch noch zu untersuchen, wenn er nur noch einen sehr schlechten Wirkungsgrad aufweist, also die Schwankungen der Lambdaregelung fast ungehindert zur zweiten Sauerstoffsonde gelangen.

Die Ansprechzeit der Sauerstoffsonde kann durch verschiedene Maßnahmen verändert werden:
- Veränderung der Schutzrohrlänge der Sonde
- bei Dickschichtsonden durch Veränderung der Schichtdicke
- ganz allgemein durch eine Veränderung des Materials der Sonde
- einen katalytisch aktiven Schutzmantel um das Sondenelement.

In der Zeichnungsfigur ist schematisch der Aufbau einer erfindungsgemäßen Vorrichtung dargestellt.

Im Abgastrakt einer Brennkraftmaschine 1 ist zunächst eine Sauerstoffsonde 2 vor dem Katalysator 3 angeordnet. Nach dem Katalysator 3 ist eine weitere Sauerstoffsonde 4 angeordnet.
Die Gemischregelung 5 benutzt die Sauerstoffsonde 2 vor dem Katalysator um die Gemischzusammensetzung zu messen. Die Katalysatorwirkungsgradermittlung 6 bekommt von der Gemischregelung 5 die oben beschriebenen Schwankungen der Gemischzusammensetzung, d.h. die sogenannten Lambdaschwankungen zugeführt und sie mißt über die Sauerstoffsonde 4 die hinter dem Katalysator 3 noch verbliebenen Restschwankungen. Aus dem Vergleich der Schwankungen vor und hinter dem Katalysator 3 wird der Wirkungsgrad des Katalysators berechnet. Unterschreitet er einen vorgebbaren Grenzwert, so erfolgt, gegebenenfalls nach einer statistischen Auswertung, in einem Anzeigeblock 7 die Anzeige, daß der Katalysator defekt ist.

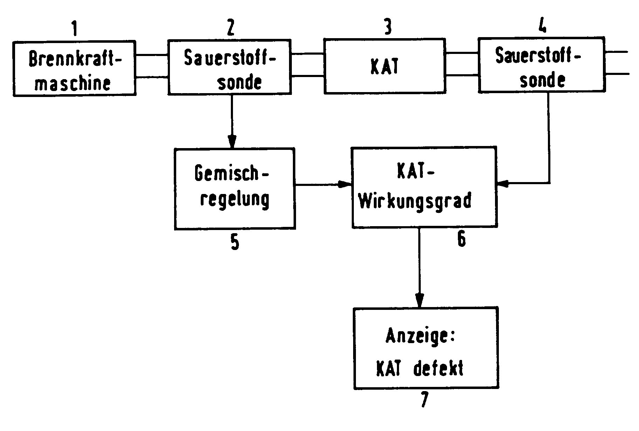

## Patentansprüche

1. Vorrichtung zur Anpassung von Verfahren zur Katalysatorwirkungsgradüberprüfung an Katalysatoren mit unterschiedlichen Wirkungsgrad, bei der vor und nach dem Katalysator (3) je eine Sauerstoffsonde (2,4) angeordnet ist und die Sauerstoffsonden (2,4) unterschiedliche Ansprechzeiten haben,
**dadurch gekennzeichnet,**
- daß die Ansprechzeit der Sauerstoffsonde durch eine Veränderung des Schutzrohres der Sauerstoffsonde variiert wird.

2. Vorrichtung nach Anspruch 1
**dadurch gekennzeichnet,**
daß die Sauerstoffsonde (4) nach dem Katalysator (3) eine längere Ansprechzeit hat als die Sauerstoffsonde (2) vor dem Katalysator (3).

3. Vorrichtung nach Anspruch 1
**dadurch gekennzeichnet,**
daß die Sauerstoffsonde (4) nach dem Katalysator (3) eine kürzere Ansprechzeit hat als die Sauerstoffsonde (2) vor dem Katalysator (3).

4. Vorrichtung nach Anspruch 1
**dadurch gekennzeichnet,**
daß die Ansprechzeit der Sauerstoffsonde variiert wird durch eine Veränderung des Materials der Sonde.

5. Vorrichtung nach Anspruch 1
**dadurch gekennzeichnet,**
daß die Ansprechzeit der Sauerstoffsonde variiert wird durch Vorsehen eines katalytisch aktiven Schutzmantels um das Sensorelement.

6. Vorrichtung nach Anspruch 1
**dadurch gekennzeichnet,**
daß die Sonde aus einem Dickschichtsensor besteht und die Ansprechzeit der Sauerstoffsonde variiert wird durch eine Veränderung der Elementdicke.

## Claims

1. Device for the adaptation of methods for checking catalyst efficiency to catalysts of different efficiency, in which an oxygen probe (2, 4) is arranged upstream and downstream of the catalyst (3) in each case and the oxygen probes (2, 4) have different response times, characterized in that the response time of the oxygen probe is varied by a variation of the protective tube of the oxygen probe.

2. Device according to Claim 1, characterized in that the oxygen probe (4) downstream of the catalyst (3) has a longer response time than the oxygen probe (2) upstream of the catalyst (3).

3. Device according to Claim 1, characterized in that the oxygen probe (4) downstream of the catalyst (3) has a shorter response time than the oxygen probe (2) upstream of the catalyst (3).

4. Device according to Claim 1, characterized in that the response time of the oxygen probe is varied by a variation of the material of the probe.

5. Device according to Claim 1, characterized in that the response time of the oxygen probe is varied by the provision of a catalytically active protective sheath around the sensor element.

6. Device according to Claim 1, characterized in that the probe consists of a thick-film sensor, and the response time of the oxygen probe is varied by a variation of the element thickness.

## Revendications

1. Dispositif pour l'adaptation de procédés pour évaluer l'efficacité catalytique d'un catalyseur en cas d'efficacités différentes de ce catalyseur, une sonde à oxygène (2, 4) étant chaque fois, selon ces procédés, disposée avant et après le catalyseur (3) et les sondes à oxygène (2, 4) présentant des temps de réponse différents,
caractérisé par le fait que
- le temps de réponse de la sonde à oxygène est changé par modification de son tube de protection.

2. Dispositif selon la revendication 1,
caractérisé par le fait que la sonde à oxygène (4) disposée après le catalyseur (3) présente un temps de réponse plus long que la sonde à oxygène (2) disposée devant celui-ci.

3. Dispositif selon la revendication 1, caractérisé par le fait que
la sonde à oxygène (4) disposée après le catalyseur (3) présente un temps de réponse plus court que la sonde à oxygène (2) disposée avant celui-ci.

4. Dispositif selon la revendication 1,
caractérisé par le fait que
le temps de réponse de la sonde à oxygène est changé par modification de son matériau constitutif.

5. Dispositif selon la revendication 1,
caractérisé par le fait que
le temps de réponse de la sonde à oxygène est changé par application d'un manteau de protection catalytiquement actif autour de l'élément constitutif de celle-ci.

6. Dispositif selon la revendication 1,
caractérisé par le fait que la sonde est constituée d'un capteur à couche épaisse et que le temps de réponse de la sonde à oxygène est changé par modification de l'épaisseur de son élément constitutif.
